# EUROPEAN PATENT APPLICATION

(11) **EP 4 851 826 A1**
(43) Date of publication of application: **09.12.2026**
(21) Application number: 24921327.3
(22) Date of filing: 25.07.2024
(51) Int. Cl.: G06F 16/9532

(54) **SEARCH METHOD AND APPARATUS, AND COMPUTER-READABLE STORAGE MEDIUM AND COMPUTER PROGRAM PRODUCT**

(30) Priority: 31.01.2024 CN 202410139586
(71) Applicant: Beijing Zitiao Network Technology Co., Ltd., Beijing 100190 (CN)
(72) Inventor: LUO, Song, Beijing 100028 (CN)
(74) Representative: Grünecker Patent- und Rechtsanwälte PartG mbB
(86) International application number: PCT/CN2024/107415
(87) International publication number: WO 2025/161295

(57) **Abstract**

The present disclosure relates to a search method, an apparatus, a computer readable storage medium and a computer program product, which relates to the technical field of terminals. The search method includes: obtaining first information input by a user on an interface of a conversation list, wherein the conversation list comprises a conversation with a virtual object; determining a search approach corresponding to the first information; displaying a search result interface in response to the first information corresponding to a first search approach; and displaying a conversation interface of the virtual object in response to the first information corresponding to a second search approach, and displaying a response of the virtual object to the first information on the conversation interface.

## Description

### CROSS-REFERENCE TO RELATED APPLICATIONS

This application is based on and claims the benefit of priority of the Chinese patent application No. 202410139586.3 filed on January 31, 2024, which is hereby incorporated by reference in its entirety into the present application.

### TECHNICAL FIELD

This disclosure relates to the technical field of terminals, particularly to a search method, an apparatus, a computer-readable storage medium, and a computer program product.

### BACKGROUND

In related technologies, users can enter search information on a search page to obtain results corresponding to their search information. After a user triggers a search process, a search engine is usually invoked to retrieve web pages containing the user's search information and return these web pages to the user.

### SUMMARY

This summary is provided for a concise introduction of the inventive concept of the present application, which will be described in detail in the Detailed Description below. This summary is not intended to identify critical features or essential features of the claimed technical solution, nor is it intended to be used to limit the scope of the claimed technical solution.

According to some embodiments of this disclosure, there is provided a search method, including: obtaining first information input by a user on an interface of a conversation list, wherein the conversation list comprises a conversation with a virtual object; determining a search approach corresponding to the first information; displaying a search result interface in response to the first information corresponding to a first search approach; and displaying a conversation interface of the virtual object in response to the first information corresponding to a second search approach, and displaying a response of the virtual object to the first information on the conversation interface.

According to other embodiments of this disclosure, there is provided a search apparatus, including: an acquisition module configured for obtaining first information input by a user on an interface of a conversation list, wherein the conversation list comprises a conversation with a virtual object; a determination module configured for determining a search approach corresponding to the first information; a first display module configured for displaying a search result interface in response to the first information corresponding to a first search approach; and a second display module configured for displaying a conversation interface of the virtual object in response to the first information corresponding to a second search approach, and displaying a response of the virtual object to the first information on the conversation interface.

According to some embodiments of this disclosure, there is provided a search apparatus, including: a memory; and a processor coupled to the memory, the processor configured to perform the search method provided by any embodiment of the present disclosure based on instructions stored in the memory.

According to some embodiments of this disclosure, there is provided a computer-readable storage medium stored thereon a computer program that, when executed by a processor, performs the search method provided by any embodiment of the present disclosure.

According to some embodiments of this disclosure, there is provided a computer program product that, when executed on a computer, causes the computer to implement the search method provided by any embodiment of the present disclosure.

According to some embodiments of this disclosure, there is provided a computer program, including: instructions that, when executed by a processor, cause the processor to perform the search method provided by any embodiment of this disclosure.

Other features, aspects and advantages of the present disclosure will become apparent from the following detailed description of exemplary embodiments of the present disclosure with reference to the accompanying drawings.

### BRIEF DESCRIPTION OF THE DRAWINGS

Below, preferred embodiments of this disclosure will be described with reference to the drawings. The accompanying drawings described herein are intended to provide a further understanding of the present disclosure, and together with the specific description of the drawings below, are included in and constitute a part of the present specification for illustration of the present disclosure. It should be understood that the drawings described below merely involve some embodiments of the present disclosure, and are not limitations of the present disclosure. In the drawings:
FIG. 1 shows a flowchart of a search method according to some embodiments of the present disclosure;
FIG. 2 shows a flowchart of a method for automatically determining a search approach according to some embodiments of the present disclosure;
FIG. 3 shows a schematic diagram of a interface of the conversation list according to some embodiments of the present disclosure;
FIGS. 4A and 4B show schematic diagrams of an interface for a user to manually select a search approach;
FIG. 5 shows a schematic diagram of a search result interface according to some embodiments of the present disclosure;
FIG. 6 shows a schematic diagram of a conversation interface of a virtual object according to some embodiments of the present disclosure;
FIG. 7 shows a schematic structural diagram of a search apparatus according to some embodiments of the present disclosure;
FIG. 8 shows a schematic structural diagram of an electronic device according to some embodiments of the present disclosure;
FIG. 9 shows a schematic structure diagram of a computer system according to some embodiments of the present disclosure.

It should be understood that, for ease of description, the dimensions of the various parts shown in the drawings are not drawn to actual proportions. Throughout the drawings, the same or similar reference signs indicate the same or similar elements. Therefore, once an item is defined in a drawing, there is no need for further discussion in other accompanying drawings.

### DETAILED DESCRIPTION

Below, a clear and complete description will be given for the technical solution of embodiments of the present disclosure with reference to the figures of the embodiments. Obviously, merely some embodiments of the present disclosure, rather than all embodiments thereof, are given herein. The description of the embodiments is merely illustrative, and in no way serves as any limitation on the present disclosure and its application or use. It should be understood that the present disclosure can be implemented in various forms and should not be construed as limited to the embodiments set forth herein.

It should be understood that the various steps described in the methods of the embodiments of the present disclosure may be executed in a different order, and/or executed in parallel. In addition, the methods may include additional steps and/or some of the illustrated steps may be omitted. The scope of this disclosure is not limited in this regard. Unless specifically stated otherwise, relative arrangement and values of components and steps, numerical expressions and values set forth in these embodiments are to be construed as merely illustrative, not limiting the scope of the present disclosure.

The term "including" and its variations used in this disclosure refer to an open-ended term that includes at least the following elements/features, but does not exclude other elements/features, i.e. "including but not limited to". In addition, the term "containing" and its variations used in this disclosure refer to an open-ended term that includes at least the following elements/features, but does not exclude other elements/features, i.e., "containing but not limited to". Therefore, the terms "including" and "containing" are synonymous. The term "based on" means "based at least in part on".

"One embodiment", "some embodiments" or "embodiments" used throughout the specification mean that specific features, structures or characteristics described in connection with the embodiments are included in at least one embodiment of the present invention. For example, the term "one embodiment" means "at least one embodiment"; the term "another embodiment" means "at least one additional embodiment"; the term "some embodiments" means "at least some embodiments". In addition, occurrences of the phrases "in one embodiment," "in some embodiments," or "in an embodiment" throughout this specification do not necessarily refer to the same embodiment, but may refer to the same embodiment.

It should be noted that the concepts of "first" and "second" mentioned in the present disclosure are only used to distinguish different devices, modules or units, and are not used to limit the order of functions performed by these devices, modules or units, or interdependence therebetween. Unless otherwise specified, terms such as "first" and "second" are not intended to imply that objects described in this way must be in any particular order in time, space, rank, or otherwise.

It should be noted that the modifications of "a" and "a plurality of" mentioned in the present disclosure are illustrative and not restrictive, and those skilled in the art should understand that unless clearly indicated in the context, they should be understood as "one or more".

The names of messages or information exchanged between multiple devices in the embodiments of the present disclosure are only used for illustrative purposes, and are not used to limit the scope of these messages or information.

The following will provide a detailed explanation of the embodiments disclosed herein with reference to the accompanying drawings, but the present disclosure is not limited to these specific embodiments. The following specific embodiments can be combined with each other, and the same or similar concepts or processes may not be repeated in some embodiments. In addition, in one or more embodiments, specific features, structures or characteristics may be combined in any suitable manner, as will be apparent to those skilled in the art from this disclosure.

Each record in the search results obtained by a search engine includes some or all of the information entered by users. However, users are sometimes unable to accurately express their desired search results through the information they have entered, resulting in the need for a secondary search.

With the development of artificial intelligence technology, users can get answers to their questions by chatting with intelligent virtual objects. Intelligent virtual objects are typically implemented based on machine learning models that perform semantic analysis on user input information and generate response content by referencing content in existing knowledge bases. However, intelligent virtual objects may sometimes make omissions when integrating content from different information sources to provide replies, resulting in false or illogical response content. This may also result in inaccurate answers being provided to users.

This disclosure provides a search method, apparatus, and related device for solving the problem of how to supply accurate feedback information based on user input information.

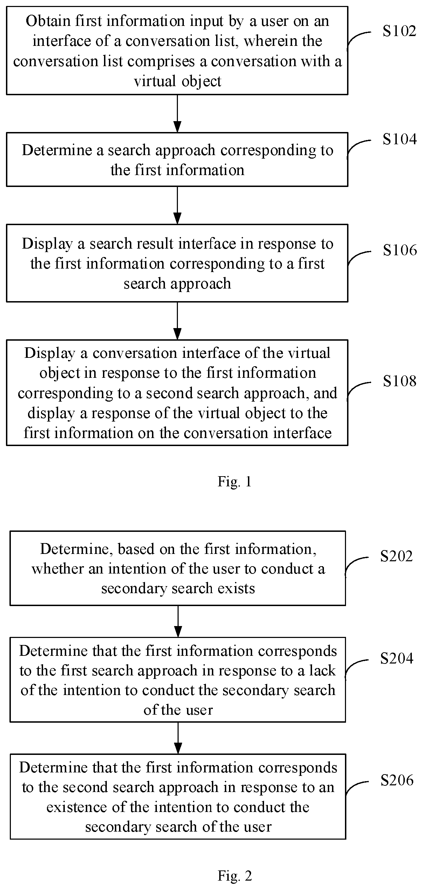

In this disclosure, for first information entered by a user, a search result interface is displayed based on a first search approach, or a virtual object is invoked to provide a response based on a second search approach, so that more accurate feedback information can be communicated to users. A search method according to an embodiment of this disclosure will be described below with reference to FIG. 1.

FIG. 1 shows a flowchart of a search method according to some embodiments of the present disclosure. As shown in FIG. 1, the search method of this embodiment includes steps S102 to S108.

In step 102, first information input by a user is obtained on a interface of the conversation list, wherein the conversation list includes a conversation with a virtual object.

Here, "conversation" refers to a conversation between a user and a virtual object or a real user, and the content of the conversation may be in various forms such as text, images, voice, video, or a combination of at least two of the above. The virtual object generates a response to a user conversation message based on the user conversation message and a machine learning model. In the scenario of a conversation between a user and a virtual object, the virtual object can generate a corresponding result based on the information input by the user on a conversation page. Virtual objects can also be referred to as "robots" or "digital humans", which may be intelligent customer assistants, intelligent assistants or intelligent objects applied in specific areas such as translation and problem solving. The machine learning models on which virtual objects are based can be either foundation models or large language models (LLMs), which can generally be referred to as "large models". If necessary, the machine learning models can be of other types that are not described here.

The conversation list contains entries to conversation pages with one or more virtual objects. For each entry, one or more of an associated virtual object's avatar, name, introduction, and summary of historical conversations can be displayed. In addition, the conversation list can also include entries to conversation pages with real users. When a user wants to communicate with one of these objects (virtual objects or real users), he/she usually enters a conversation page by triggering an entry in the conversation list or by searching for an entry to the conversation page of that object.

In an embodiment of this disclosure, a user can input first information via the interface of the conversation list. The first information is used to describe what information the user wants to retrieve. If the first information is text, it can be in the form of one or more words, a question, a command, etc. In some embodiments, the first information can be understood as search information. In addition to text, the first information can be a combination of images, sounds, videos or data in various formats.

In some embodiments, the first information input by the user can be obtained via an input control on the interface of the conversation list, such as a text input box, a multimedia file upload entry, etc.

In step 104, a search approach corresponding to the first information is determined. The search approach includes a first search approach and a second search approach.

The determination process may be an automatic determination based on the first information or a manual determination by the user. In the case of automatic determination, based on the type or intention of the first information, a search approach with a higher match degree with the first information can be determined as the search approach corresponding to the first information.

In step 106, in response to the first information corresponding to a first search approach, a search result interface is displayed. That is, in the case where the first information corresponds to the first search approach, a more accurate result can be obtained by providing a response to the first information via the search result interface.

The search result interface includes one or more links. For each link, its corresponding page contains some or all content of the first information. The search result interface is based on results retrieved by a search engine.

The content in the search result interface obtained in the first search approach includes content with real and clear sources. If the first information indicates a higher requirement for credibility, or if its semantics are clear enough that the user is not expected to conduct another search, then the first search approach may provide a more accurate response result.

In step S108, in response to the first information corresponding to a second search approach, a conversation interface of a virtual object is displayed, and a response of the virtual object to the first information is displayed on the conversation interface. That is, in the case where the first information corresponds to the second search approach, a more accurate result can be obtained by providing a response to the first information by a virtual object.

In the second search approach, a virtual object can be automatically invoked and the first information is sent to the virtual object as a conversation message between the user and the virtual object. A conversation message returned by the virtual object based on the semantics of the first information is the response to the first information. The response of the virtual object may include at least one of content generated by the virtual object or a link.

The response obtained in the second search approach is a semantic analysis result of the first information, so it can reflect a more accurate implicit sense of the first information and provide a better match result. That is, if the first information has complex semantics, indicating that the user may have a need for further communication, the second search approach can provide a more accurate result, and it is convenient for the user to conduct further communication in the conversation interface by entering second information to obtain more content, for example.

This embodiment of the present disclosure provides two search approaches for the user input information so that a more suitable search approach can be used to obtain a response result based on the characteristics of the first information. Therefore, this disclosure can deliver more accurate feedback information to users and avoid the need for users to conduct repeated searches. Thus, search accuracy and search efficiency can be improved for users.

Some embodiments of this disclosure may determine whether the user intends to conduct a secondary search based on the first information, in order to further determine a search approach. An embodiment will be described below with reference to FIG. 2 to describe the method for determining a search approach of the present disclosure.

FIG. 2 shows a flowchart of a method for automatically determining a search approach according to some embodiments of the present disclosure. As shown in FIG. 2, the method for automatically determining a search approach provided in this embodiment includes steps S202 to S206.

In step S202, based on the first information, it is determined whether the user intends to conduct a secondary search.

The secondary search refers to a further search conducted by the user based on the first search result. For example, if the user is dissatisfied with the result of the first search, or needs more accurate information, or needs to obtain other information related to the search result, a further search will be conducted. In some embodiments, semantic analysis can be performed on the first information to directly or indirectly determine whether the user has the intent to perform a secondary search. For example, a result of whether the first information has the intention of a secondary search can be obtained directly through semantic analysis, or a preliminary analysis result can be obtained through semantic analysis, and then a result of whether the first information has the intention of a secondary search can be obtained based on the preliminary analysis result. This semantic analysis can be achieved by a semantic analysis model.

In some embodiments, the user's intention for a secondary search is determined based on a type of the first information. For example, a type to which the first information belongs is determined; then, in response to the first information belonging to an Factual (or Objective) type, it is determined that the user has no intention to conduct a secondary search; and in response to the first information belonging to a Non-Factual (or Subjective) type, it is determined that the user has an intention to conduct a secondary search. A search need belonging the Factual type has a higher requirement for the accuracy of the search result, so it is necessary to provide feedback in the first search approach to clarify the information source of the search result, so as to reduce the verification and confirmation workload for the user, and to improve the search efficiency and accuracy. For a search need belonging to the Non-Factual type, the requirement for information sources is not high. Therefore, a feedback result can be obtained through the second search approach, so that the user can efficiently communicate with a virtual object again based on the initial feedback result. Of course, it is also possible to skip the step of determining whether there is an intention for a secondary search, and to determine a search approach directly on the basis of the type of the first information. That is, in response to the first information belonging to the Factual type, it is determined that the first information corresponds to a first search approach; and in response to the first information belonging to the Non-Factual type, it is determined that the first information corresponds to a second search approach.

In some embodiments, the Factual type comprises at least one of: historical event, scientific fact, scientific definition, statistical data, product information, or geographic information; and the Non-Factual type comprises at least one of: conversation, assessment, consultation, creativity, conceptual understanding, skill, suggestion, logical reasoning, career development and planning, or recommendation. For example, if the first information is "The distance between the Earth and the Moon", this indicates that the first information is in the Factual type and has a unique corresponding result, so there is no intention for a secondary search; if the first information is "What are the top attractions in XX city", this indicates that the user is interested in tourism in XX city and may search again for information such as sightseeing routes and XX city cuisine, and therefore there is an intention to conduct a secondary search.

In step S204, it is determined that the first information corresponds to the first search approach in response to a lack of the intention to conduct the secondary search of the user. That is, if there is a low probability that the user will search again on the basis of the first information, a search result can be fed back via a search result interface to improve search accuracy.

In step S206, it is determined that the first information corresponds to the second search approach in response to an existence of the intention to conduct the secondary search of the user. That is, if there is a high probability that the user will search again based on the first information, a search result can be fed back by a virtual object to improve search efficiency.

The above embodiment automatically determines a search approach based on whether the user has an intention for a secondary search, so as to automatically select an approach that can respond more accurately and efficiently to the first information based on the semantics of the first information, thereby improving search efficiency and accuracy.

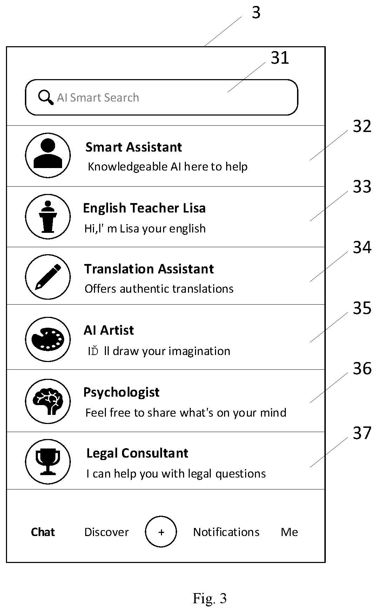

FIG. 3 shows a schematic diagram of a interface of the conversation list according to some embodiments of the present disclosure. As shown in FIG. 3, the interface 3 of this embodiment includes an input control 31 that is illustrated as an input box. In addition, the interface 3 further includes entry controls 32 to 37 to the conversation interfaces of multiple virtual objects. Each entry control includes, for example, an avatar, a name, descriptive information, etc., the specific content of which can be set by those skilled in the art as needed. If necessary, the interface 3 can further contain entries to conversation interfaces with real users, which will not be described here. The user can enter the first information via the input control 31. In the case where the first information corresponds to the first search approach, the interface 3 is switched to a search result interface; in the case where the first information corresponds to the second search approach, the interface 3 is switched to a conversation interface corresponding to a virtual object shown in this interface. As the conversation list may not be fully displayed on the screen, this virtual object may or may not be currently displayed in the interface 3.

In some embodiments, the conversation list includes conversations with multiple virtual objects, and displaying the conversation interface of the virtual object in response to the first information corresponding to the second search approach includes: determining a type to which the first information belongs; determining a target virtual object corresponding to the first information based on the categories to which the multiple virtual objects correspond respectively; displaying the conversation interface of the target virtual object. That is, based on the type of the first information, a virtual object used to respond to the first information can be automatically determined from the multiple virtual objects to provide a more accurate feedback response to the user regarding to the first information. For example, if the first information concerns emotional counseling, a virtual object "Psychologist" can be used to respond; if the first information concerns artistic creativity, a virtual object "AI artist" can be used to respond. Therefore, based on the selection of an appropriate search approach based on the first information, a virtual object can be further determined by reference to the first information to provide more accurate feedback to the user, thereby improving the search efficiency and accuracy for the user.

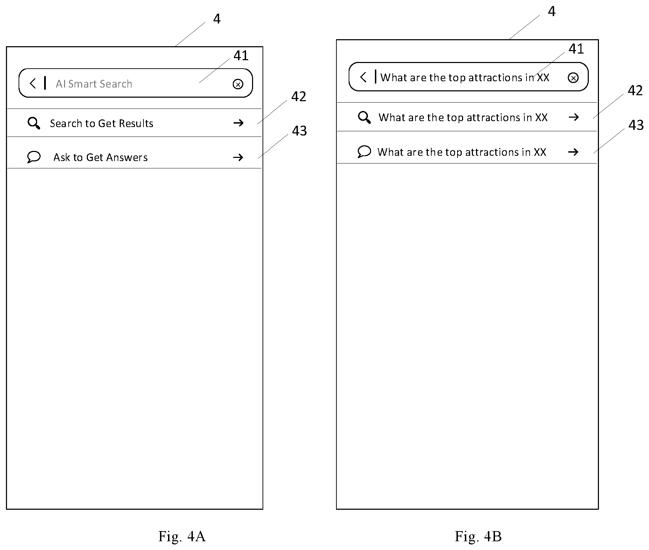

In some embodiments, the user can manually select a search approach corresponding to the first information. For example, a first jump control corresponding to the first search approach and a second jump control corresponding to the second search approach are displayed; a search approach is determined based on the user's selection of the first or second jump control. FIGS. 4A and 4B show schematic diagrams of an interface for a user to manually select a search approach. When the user triggers the input of the first information, for example, by clicking the input control 31 in the interface 3 shown in FIG. 3, a search interface 4 shown in FIG. 4A can be displayed. As shown in FIG. 4A, the interface 4 includes an input control 41 (which may be the same as the input control 31), a first jump control 42, and a second jump control 43 to prompt the user that a search action can be triggered by two jump controls, on which navigation description may be provided by default. For example, the first jump control 42 displays "Get search results" and the second jump control displays "Ask questions to get answers" to clearly indicate that the two jump controls correspond to different search approaches. For example, after the user enters the first information, "What are the top attractions in XX city", the interface 4 may be updated as shown in FIG. 4B. The text on both the first jump control 42 and the second jump control 43 is updated to the content of the first information, with distinct icons being retained. Thus, the user can further confirm whether to be presented with a search result interface for "What are the top attractions in XX city" or to ask "What are the top attractions in XX city" in a conversation interface corresponding to a virtual object. Based on the user triggering one of the first jump control 42 and the second jump control 43, a search approach can be determined.

The display interfaces corresponding to the two search approaches will be further described below.

First, a search result interface will be described. The search result interface contains one or more results retrieved by a search engine, wherein the results correspond to the first information. Each result may contain one or more of a title, a link, text of webpage content or an image of a retrieved webpage, where the text is taken from the original content of the web page. In some embodiments, in addition to one or more results retrieved by a search engine, the search result interface may also include generative responses to the first information that are made by virtual objects, as well as entry controls for virtual object conversation interfaces, wherein the generative responses are determined based on the results of processing the first information using generative machine learning models.

In response to an entry control being triggered, a conversation interface of a virtual object corresponding to the entry control is displayed. The virtual object can be an arbitrary virtual object, a specified virtual object, or a virtual object determined based on the first information. Therefore, after browsing the search results, the user can easily navigate to a conversation interface of a virtual object to obtain information generated by the virtual object. In the conversation interface, the first information and the generative response can be automatically synchronized. For example, the first information is automatically used as the last message (i.e. conversation) sent by the user, and the generated response is used as the last message (i.e. conversation) sent by the virtual object. Of course, the first information can also be displayed in other forms or not included in the conversation interface.

The generative machine models are machine learning models that the virtual objects rely on, which can be models that generate text based on text, models that generate multimedia content (such as images) based on text, models that generate text based on multimedia content, or models that generate multimedia content based on multimedia content, etc.

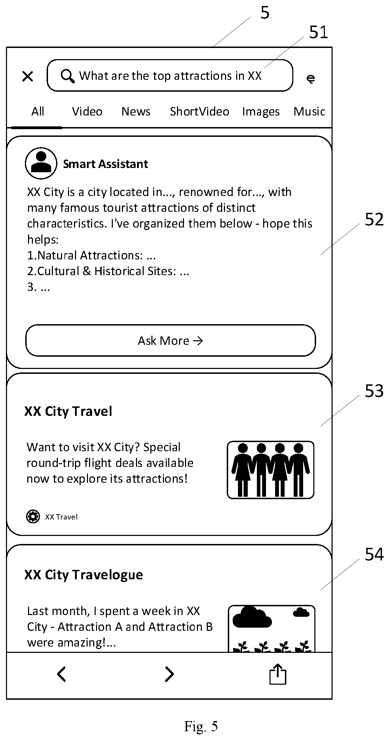

An embodiment will be described below with reference to FIG. 5 to describe the search result interface.

FIG. 5 shows a schematic diagram of a search result interface according to some embodiments of the present disclosure. As shown in FIG. 5, the search result interface 5 of this embodiment includes an input control 51 and search result controls 53 and 54. By triggering a search result control, the user can be navigated to a webpage or application corresponding to the search result. In addition, the search result interface 5 further includes an entry control 52 corresponding to a conversation interface of a virtual object, on which the content automatically generated by the virtual object "Intelligent Assistant" based on the first information "What are the top attractions in XX city" is displayed. If the auto-generated content is excessively long, it is possible to only display a portion of the content. Upon an "Ask more" button on the entry control 52 is triggered, a conversation interface with "Intelligent Assistant" can be displayed.

Therefore, the user can choose to view content from real sources or further communicate with the virtual object to get more in-depth information on the search result interface as needed, thereby improving the user's search efficiency.

A virtual object conversation interface will be described below. After displaying the virtual object conversation interface via the second search approach, the first information can be automatically taken as the last message (i.e., conversation message) sent by the user. Of course, the first information can also be displayed in other forms or not included in the conversation interface.

In some embodiments, the response of a virtual object to the first information includes at least one of generative content outputted by a generative machine learning model based on the first information, and one or more links corresponding to the first information. The link corresponding to the first information can be a link that contains some or all of the content of the first information, or a link that contains the semantics of the first information after semantic analysis of the first information. This link can be a link to a webpage or a link to a page in an application.

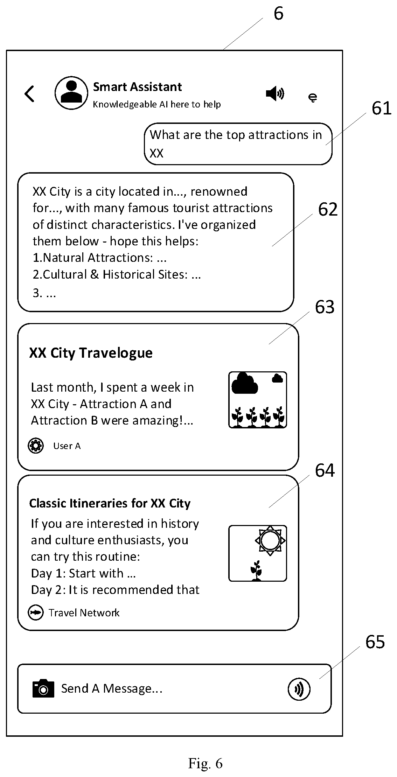

FIG. 6 shows a schematic diagram of a virtual object conversation interface according to some embodiments of the present disclosure. As shown in FIG. 6, a conversation interface 6 of this embodiment includes conversation records between the user and the virtual object "Intelligent Assistant", where a conversation message 61 sent by the user is listed on the right side of the interface 6, and the conversation messages 62 to 64 sent by the Intelligent Assistant are listed on the left side of the interface. The first message "What are the top attractions in XX city" is automatically displayed as a conversation message sent by the user in the interface 6. In response to the first message, the "Intelligent Assistant" automatically generates response content and sends it as a conversation message 62, which may be a fusion and concatenation of content from multiple information sources. The user can further inquire via the input control 65 to obtain more information.

The virtual object conversation interface may or may not display links, which can be determined based on dimensions such as the type, semantics and content of the first information. A situation will be illustrated below. In some embodiments, the response of the virtual object to the first information includes the generative content and does not comprise the link in response to the first information comprising a creative intention; and the response of the virtual object to the first information includes the generative content and the link of in response to the first information not comprising the creative intention. For example, if the first information is "Draw a photo of Beethoven and Einstein", then the first information is actually a request for AI painting. In this case, the virtual object can only send a generated image without sending a link related to "Draw a photo of Beethoven and Einstein". This embodiment allows for more accurate feedback to users and can reduce redundant information.

In the case where the feedback content of the virtual object includes both generative content and links, the generative content can be sent to the user first (i.e. displayed first), or the links can be sent to the user first (i.e. displayed first). The sending sequence can be specified or automatically determined based on the first information, for example, determined based on the match degree between the content of the links and the first information.

In some embodiments, if a match degree between the content of the link and the first information is greater than a threshold, priority is given to the display of the links, i.e., the links are displayed before the generative content; and if the match degree between the content of the link and the first information is not greater than the threshold, priority is given to the display of the generative content, i.e., the generative content is displayed before the link, or the generative content is displayed without displaying the link. For example, if the content of a link can adequately describe or answer the first information, the link can be prioritized for display so that the user can get the desired information from the content displayed first; if each link is not highly relevant to the first information or contains only a small portion of the first information, the generative content is used first as a response, so that the user is fed back the content fused from multiple information sources that can more accurately respond to the first information. In this way, it can further improve the efficiency of information access for users.

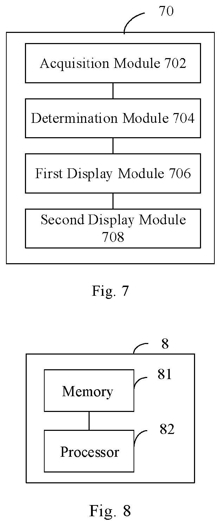

Various embodiments of the search method of this disclosure have been introduced above. Based on the method embodiments of this disclosure, embodiments of a search apparatus of this disclosure will be further described with reference to FIGS. 7 to 9.

FIG. 7 shows a schematic structural diagram of a search apparatus according to some embodiments of the present disclosure. As shown in FIG. 7, the search apparatus 70 of this embodiment includes: an acquisition module 702 configured for obtaining first information input by a user on an interface of a conversation list, wherein the conversation list comprises a conversation with a virtual object; a determination module 704 configured for determining a search approach corresponding to the first information; a first display module 706 configured for displaying a search result interface in response to the first information corresponding to a first search approach; and a second display module 708 configured for displaying a conversation interface of the virtual object in response to the first information corresponding to a second search approach, and displaying a response of the virtual object to the first information on the conversation interface.

In some embodiments, the determination module 704 is further configured for determining, based on the first information, whether an intention of the user to conduct a secondary search exists; determining that the first information corresponds to the first search approach in response to a lack of the intention to conduct the secondary search of the user; and determining that the first information corresponds to the second search approach in response to an existence of the intention to conduct the secondary search of the user.

In some embodiments, the determination module 704 is further configured for: determining a type to which the first information belongs; determining the lack of the intention to conduct the secondary search of the user in response to the first information belonging to a Factual type; and determining the existence of the intention to conduct the secondary search of the user in response to the first information belonging to a Non-Factual type.

In some embodiments, the determination module 704 is further configured for: displaying a first jump control corresponding to the first search approach and a second jump control corresponding to the second search approach; and determining the search approach based on a selection of the first jump control or the second jump control of the user.

In some embodiments, the search result interface includes: one or more results retrieved by a search engine, wherein the results correspond to the first information; or one or more results retrieved by the search engine, a generative response to the first information from the virtual object, and an entry control for the conversation interface of the virtual object, wherein the generative response is determined based on a result of processing the first information by a generative machine learning model.

In some embodiments, the second display module 708 is further configured for: determining a type to which the first information belongs; determining a target virtual object corresponding to the first information based on the categories to which the multiple virtual objects correspond respectively; and displaying the conversation interface of the target virtual object.

In some embodiments, the response of the virtual object to the first information comprises at least one of generative content outputted by a generative machine learning model based on the first information, or a link corresponding to the first information.

In some embodiments, the response of the virtual object to the first information comprises the generative content and does not comprise the link in response to the first information comprising a creative intention; and the response of the virtual object to the first information comprises the generative content and the link of in response to the first information not comprising the creative intention.

In some embodiments, the second display module 708 is further configured for: displaying the link and then displaying the generative content in response to a match degree between content of the link and the first information being greater than a threshold; and displaying the generative content and then displaying the link, or displaying the generative content without displaying the link in response to the match degree between the content of the link and the first information being not greater than the threshold.

In some embodiments, the Factual type comprises: the Factual type comprises at least one of: historical event, scientific fact, scientific definition, statistical data, product information, or geographic information; and the Non-Factual type comprises at least one of: conversation, assessment, consultation, creativity, conceptual understanding, skill, suggestion, logical reasoning, career development and planning, or recommendation.

It should be noted that the above units are only logical modules divided according to their specific functions and are not intended to limit the specific ways in which they are implemented. For example, they may be implemented in software, hardware or a combination of software and hardware. In practical implementation, the above units may be implemented as independent physical entities, or they can also be implemented by a single entity (such as a processor (CPU or DSP), integrated circuit, etc.). In addition, the above units are indicated by dashed lines in the accompanying drawings, indicating that these units may not actually exist and that the operations/functions they perform may be performed by a processing circuit per se.

In addition, although not shown, the device may also include a memory that can store various information generated by the device or various units in the device during operation, programs and data used for operation, data to be sent by a communication unit, and so on. The memory may be volatile memory and/or non-volatile memory. For example, the memory may include, but is not limited to, random access memory (RAM), dynamic random access memory (DRAM), static random access memory (SRAM), read-only memory (ROM), and flash memory. Of course, the memory may also be located outside of the device. Optionally, although not shown, the device may also include a communication unit that may be used to communicate with other apparatus. In an example, the communication unit may be implemented in any suitable manner known in the art, including communication components such as an antenna array and/or radio frequency links, various types of interfaces, communication units, and so on, which will not be described in detail herein. In addition, the device may also include other components not shown, such as a RF link, a baseband processing unit, a network interface, a processor, a controller, etc., which will not be described in detail herein.

Some embodiments of the present disclosure further provide an electronic device. FIG. 8 shows a schematic structural diagram of an electronic device according to some embodiments of the present disclosure; For example, in some embodiments, the electronic device 8 may be any type of electronic device, such as, but not limited to, a mobile terminal such as a mobile phone, a laptop, a digital broadcast receiver, a PDA (personal digital assistant), a PAD (tablet computer), a PMP (portable multimedia player), a vehicle terminal (such as vehicle navigation terminal), or a fixed terminal such as a digital TV, a desktop computer, etc. For example, the electronic device 8 may include a display panel for displaying data and/or execution results utilized in the scheme of the present disclosure. For example, the display panel can have various shapes. For example, it can be a rectangular panel, an elliptical panel, or a polygonal panel. Furthermore, the display can be not only flat, but curved or even spherical.

As shown in FIG. 8, the electronic device 8 of this embodiment comprises: a memory 81 and a processor 82 coupled to the memory 81. It should be noted that the components of the electronic device 8 shown in FIG. 8 are illustrative and not limiting. Depending on the actual application requirements, the electronic device 8 may include other components. The processor 82 can control other components in the electronic device 8 to perform desired functions.

In some embodiments, the memory 81 is used to store one or more computer-readable instructions. The processor 82 is used to execute these computer-readable instructions that, when executed by the processor 82, perform the method according to any of the above embodiments. The specific implementation of each step of the method and related explanations can be found in the above embodiments, and will not be repeated here.

For example, the processor 82 and the memory 81 can directly or indirectly communicate with each other. For example, the processor 82 and the memory 81 can communicate over a network. The network can be a wireless network, a wired network, and/or any combination of wireless and wired networks. The processor 82 and the memory 81 may also communicate with each other over a system bus, and this disclosure is not limited thereto.

For example, the processor 82 may be embodied as various suitable processors, processing devices, etc., such as a central processing unit (CPU), a graphics processing unit (GPU), a network processor (NP), etc; It can also be a digital signal processor (DSP), an application specific integrated circuit (ASIC), a field programmable gate array (FPGA), or other programmable logic devices, discrete gates or transistor logic devices, or discrete hardware components. The central processing unit (CPU) may be based on the X86 or ARM architecture. For example, the memory 81 may include any combination of various forms of computer-readable storage media, such as volatile memory and/or non-volatile memory. The memory 81 may include a system memory, which stores an operating system, application programs, a boot loader, a database, and other programs. Various applications and data can also be stored in the storage media.

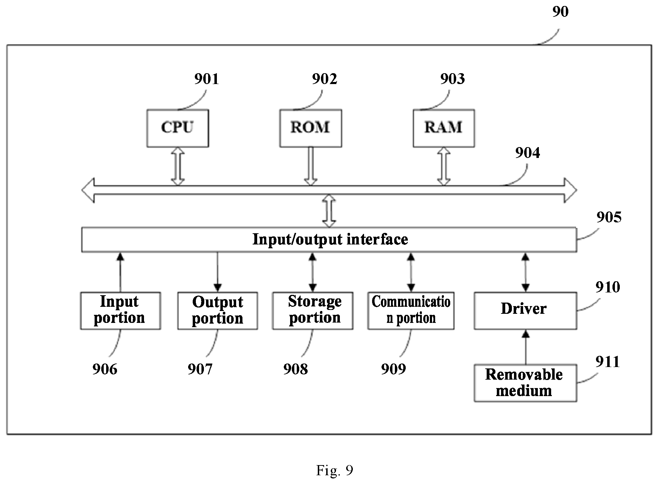

In addition, according to some embodiments of the present disclosure, various operations/processes according to the present disclosure may be implemented by software and/or firmware, and programs constituting the software may be installed, from storage media or networks, on a computer system having dedicated hardware structures, such as the computer system 90 shown in FIG. 9. The computer system with various programs installed can perform various functions, including those functions mentioned above. FIG. 9 shows a schematic structure diagram of a computer system according to some embodiments of the present disclosure.

In FIG. 9, the central processing unit (CPU) 901 performs various processes based on programs stored in the read-only memory (ROM) 902 or programs loaded from the storage device 708 to the random access memory (RAM) 903. Data required for CPU 901 to perform various processes is also stored in RAM 903 as needed. The central processing unit is only an example and can also be other types of processors, such as the various processors mentioned above. The ROM 902, RAM 903, and storage section 908 may be various forms of computer readable storage media, as described below. It should be noted that although ROM 902, RAM 903, and storage device 908 are shown separately in FIG. 9, one or more of them may be combined or located in the same or different memory or storage modules.

The CPU 901, the ROM 902, and the RAM 903 are connected to each other via a bus 904. An input/output (I/O) interface 905 is also connected to the bus 904.

The following components are connected to the input/output interface 905: an input section 906, such as a touch screen, a touch pad, a keyboard, a mouse, an image sensor, a microphone, an accelerometer, a gyroscope, etc; an output section 907, including a display such as a cathode ray tube (CRT), liquid crystal display (LCD), a speaker, a vibrator, etc; a storage section 908, including a hard disk drive, a magnetic tape drive, etc; and a communication section 909 including a network interface card, such as a LAN card, a modem, etc. The communication section 909 allows communication to be performed over a network, such as the Internet. It is easy to understand that although the various devices or modules in the computer system 90 are shown in FIG. 9 communicating over the bus 904, they may also communicate over networks or other means, where the networks may include wireless networks, wired networks, and/or any combination of wireless and wired networks.

A drive 910 is also connected to input/output interface 905 as needed. A removable medium 911, such as a magnetic disk, an optical disk, a magneto-optical disk, a semiconductor memory, etc., is mounted on the drive 910 as needed so that computer programs read from the medium can be installed in the storage section 908 as needed.

In the case of implementing the above series of processes by software, the programs that make up the software may be installed from a network, such as the Internet, or from a storage medium, such as the removable media 911.

According to an embodiment of the present disclosure, the processes described above with reference to the flowchart can be implemented as a computer software program. For example, some embodiments of the present disclosure include a computer program product comprising a computer program carried on a computer-readable medium, the computer program containing program code for performing the method illustrated in the flowcharts. In such an embodiment, the computer program may be downloaded and installed from the network via the communication device 909, or installed from the storage device 908 or from the ROM 902. When the computer program is executed by a CPU 901, the above functions defined in the method provided by the embodiment of the present disclosure are performed.

It should be noted that, in the context of the present disclosure, a computer-readable medium may be a tangible medium, which may contain or store a program for use by or in connection with an instruction execution system, apparatus, or device. The computer readable medium may be a computer readable signal medium or a computer readable storage medium, or any combination of thereof. The computer readable storage medium may be, but is not limited to: an electronic, magnetic, optical, electromagnetic, infrared, or semiconductor system, apparatus, or device, or any combination of the above. More specific examples of the computer readable storage medium may include, but are not limited to: electrical connection with one or more wires, portable computer disk, hard disk, random access memory (RAM), read only memory (ROM), erasable programmable read only memory (EPROM or flash), fiber optics, portable compact disk Read only memory (CD-ROM), optical storage device, magnetic storage device, or any suitable combination of the foregoing. In the present disclosure, a computer readable storage medium can be any tangible medium that can contain or store a program, which can be used by or in connection with an instruction execution system, apparatus or device. In the present disclosure, a computer readable signal medium may include a data signal that is propagated in the baseband or as part of a carrier, carrying computer readable program code. Such propagated data signals can take a variety of forms including, but not limited to, electromagnetic signals, optical signals, or any suitable combination of the foregoing. The computer readable signal medium can also be any computer readable medium other than a computer readable storage medium, which can transmit, propagate, or transport a program for use by or in connection with the instruction execution system, apparatus, or device. Program code embodied on a computer readable medium can be transmitted by any suitable medium, including but not limited to wire, fiber optic cable, RF (radio frequency), etc., or any suitable combination of the foregoing.

The above computer readable medium may be included in the electronic device described above; or it may exist alone without being assembled into the electronic device.

In some embodiments, there is further provided a computer program, comprising: instructions that, when executed by a processor, cause the processor to perform the method of any one of the above embodiments. For example, the instructions can be embodied as computer program code.

In embodiments of the present disclosure, computer program code for executing operations of the present disclosure may be complied by any combination of one or more program design languages, the program design languages including, but not limited to, object-oriented program design languages, such as Java, Smalltalk, C++, etc, as well as conventional procedural program design languages, such as "C" program design language or similar program design language. A program code may be completely or partly executed on a user computer, or executed as an independent software package, partly executed on the user computer and partly executed on a remote computer, or completely executed on a remote computer or server. In the latter circumstance, the remote computer may be connected to the user computer through various kinds of networks, including local area networks (LAN) or wide area networks (WAN), or connected to external computers (for example using an Internet service provider via the Internet).

The flowcharts and block diagrams in the different depicted embodiments illustrate the architecture, functionality, and operation of some possible implementations of apparatus, methods and computer program products. In this regard, each block in the flowchart or block diagrams may represent a module, segment, or portion of code, which comprises one or more executable instructions for implementing the specified function or functions. It should also be noted that, in some alternative implementations, the functions noted in the block may occur out of the order noted in the drawings. For example, two blocks shown in succession may be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The modules, components or units involved in the embodiments described in the present disclosure can be implemented by software or hardware. Wherein, the names of the modules, components or units do not constitute a limitation on the modules, components or units themselves under certain circumstances.

The functions described above may be performed at least in part by one or more hardware logic components. For example, without limitation, exemplary types of hardware logic components that can be used include: Field Programmable Gate Array (FPGA), Application Specific Integrated Circuit (ASIC), Application Specific Standard Product (ASSP), System on Chip (SOC), Complex Programmable Logic Device (CPLD), etc.

The above description only shows some embodiments of the present disclosure and illustrates technical principles applied in the present disclosure. Those skilled in the art should understand that the scope of disclosure involved in this disclosure is not limited to the technical solutions formed by the specific combination of the above technical features, and should also cover other technical solutions formed by any combination of the above technical features or their equivalent features without departing from the disclosed concept, for example, technical solutions formed by replacing the above features with technical features having similar functions to (but not limited to) those disclosed in the present disclosure.

Many specific details are elaborated in the description of the present disclosure. However, it is understood that embodiments of the present invention can be implemented without these specific details. In other cases, well-known methods, structures, and techniques are not described in detail so as not to obscure the understanding of the description.

In addition, although the operations are depicted in a specific order, this should not be understood as requiring these operations to be performed in the specific order shown or performed in a sequential order. Under certain circumstances, multitasking and parallel processing may be advantageous. Likewise, although several specific implementation details are included in the above discussion, these should not be construed as limiting the scope of the present disclosure. Certain features that are described in the context of separate embodiments can also be implemented in combination in a single embodiment. Conversely, various features described in the context of a single embodiment can also be implemented in multiple embodiments individually or in any suitable subcombination.

Although some specific embodiments of the present disclosure have been described in detail by way of example, those skilled in the art should understand that the above examples are only for the purpose of illustration and are not intended to limit the scope of the present disclosure. It should be understood by those skilled in the art that the above embodiments may be modified without departing from the scope and spirit of the present disclosure. The scope of the disclosure is defined by the following claims.

## Claims

1. A search method, comprising:
obtaining first information input by a user on an interface of a conversation list, wherein the conversation list comprises a conversation with a virtual object;
determining a search approach corresponding to the first information;
displaying a search result interface in response to the first information corresponding to a first search approach; and
displaying a conversation interface of the virtual object in response to the first information corresponding to a second search approach, and displaying a response of the virtual object to the first information on the conversation interface.

2. The search method according to claim 1, wherein the determining the search approach corresponding to the first information comprises:
determining, based on the first information, whether an intention of the user to conduct a secondary search exists;
determining that the first information corresponds to the first search approach in response to a lack of the intention to conduct the secondary search of the user; and
determining that the first information corresponds to the second search approach in response to an existence of the intention to conduct the secondary search of the user.

3. The search method according to claim 2, wherein the determining, based on the first information, whether the intention to conduct the secondary search of the user exists comprises:
determining a type to which the first information belongs;
determining the lack of the intention to conduct the secondary search of the user in response to the first information belonging to a Factual type; and
determining the existence of the intention to conduct the secondary search of the user in response to the first information belonging to a Non-Factual type.

4. The search method according to any one of claims 1 to 3, wherein the determining the search approach corresponding to the first information comprises:
displaying a first jump control corresponding to the first search approach and a second jump control corresponding to the second search approach; and
determining the search approach based on a selection of the first jump control or the second jump control of the user.

5. The search method according to any one of claims 1 to 4, wherein the search result interface comprises:
one or more results retrieved by a search engine, wherein the results correspond to the first information; or
one or more results retrieved by the search engine, a generative response to the first information from the virtual object, and an entry control for the conversation interface of the virtual object, wherein the generative response is determined based on a result of processing the first information by a generative machine learning model.

6. The search method according to any one of claims 1 to 5, wherein the conversation list comprises conversations with multiple virtual objects, and the displaying the conversation interface of the virtual object in response to the first information corresponding to the second search approach comprises:
determining a type to which the first information belongs;
determining a target virtual object corresponding to the first information based on the categories to which the multiple virtual objects correspond respectively; and
displaying the conversation interface of the target virtual object.

7. The search method according to any one of claims 1 to 6, wherein the response of the virtual object to the first information comprises at least one of generative content outputted by a generative machine learning model based on the first information, or a link corresponding to the first information.

8. The search method according to claim 7, wherein:
the response of the virtual object to the first information comprises the generative content and does not comprise the link in response to the first information comprising a creative intention; and
the response of the virtual object to the first information comprises the generative content and the link of in response to the first information not comprising the creative intention.

9. The search method according to claim 7 or 8, wherein the displaying the response of the virtual object to the first information on the conversation interface comprises:
displaying the link and then displaying the generative content in response to a match degree between content of the link and the first information being greater than a threshold; and
displaying the generative content and then displaying the link, or displaying the generative content without displaying the link in response to the match degree between the content of the link and the first information being not greater than the threshold.

10. The search method according to claim 3, wherein:
the Factual type comprises at least one of: historical event, scientific fact, scientific definition, statistical data, product information, or geographic information; and
the Non-Factual type comprises at least one of: conversation, assessment, consultation, creativity, conceptual understanding, skill, suggestion, logical reasoning, career development and planning, or recommendation.

11. A search apparatus, comprising:
an acquisition module configured for obtaining first information input by a user on an interface of a conversation list, wherein the conversation list comprises a conversation with a virtual object;
a determination module configured for determining a search approach corresponding to the first information;
a first display module configured for displaying a search result interface in response to the first information corresponding to a first search approach; and
a second display module configured for displaying a conversation interface of the virtual object in response to the first information corresponding to a second search approach, and displaying a response of the virtual object to the first information on the conversation interface.

12. A search apparatus, comprising:
a memory; and
a processor coupled to the memory, the processor configured to, based on instructions stored in the memory, carry out the search method according to any one of claims 1 to 10.

13. A computer-readable storage medium stored thereon a computer program that, when executed by a processor, implements the search method according to any one of claims 1 to 10.

14. A computer program product that, when running on a computer, causes the computer to implement the search method according to any one of claims 1 to 10.

15. A computer program, comprising:
instructions that, when executed by a processor, cause the processor to perform the search method according to any one of claims 1 to 10.
